# EUROPÄISCHE PATENTSCHRIFT

(11) **EP 0 764 496 B1**
(45) Veröffentlichungstag und Bekanntmachung des Hinweises auf die Patenterteilung: **14.04.1999**
(21) Anmeldenummer: 96110259.7
(22) Anmeldetag: 26.06.1996
(51) Int. Cl.: B23K 11/31

(54) **Scherenschweisszange für elektrische Widerstandsschweissungen, insbesondere zum Einsatz in Manipulatoren**
X-type welding gun for electric resistance welding, particularly for use on manipulators
Pince de soudage électrique par résistance du type en X, en particulier pour l'utilisation avec des manipulateurs

(30) Priorität: 20.09.1995 DE 19534845
(43) Veröffentlichungstag der Anmeldung: 26.03.1997
(73) Patentinhaber: Bayerische Motoren Werke Aktiengesellschaft, 80788 München (DE)
(72) Erfinder: Simbeck, Siegfried, 94419 Reisbach (DE)

(56) Entgegenhaltungen:
- EP-A- 0 122 360
- EP-A- 0 424 190
- DE-A- 4 006 448
- DE-A- 4 040 395
- FR-A- 2 468 433
- US-A- 4 810 849

## Beschreibung

Die Erfindung bezieht sich auch eine Scherenschweißzange der im Oberbegriff des Patentanspruches 1 beschriebenen Bauart.

Derartige Scherenschweißzangen dienen bekanntlich in Kombination mit Manipulatoren bzw. programmgesteuerten Robotern der Verschweißung von Blechteilen zu räumlich gestalteten Körpern, wie z.B. einer Fahrzeugbodengruppe. Bei der Verbringung der Scherenschweißzange von einem Schweißbereich zum nächsten Schweißbereich kann ein Abschnitt des räumlichen Blechkörpers ein Hindernis bilden für den geöffneten Scherenarm der Schweißzange. Bekannt ist hierfür (z.B. DE-A 40 06 448), die Scherenschweißzange durch den Manipulator so weit vom Blechkörper zurückzuziehen oder diesen vom Manipulator, daß eine Drehung von 180° um eine in der Bauteilebene liegende Zangen-Längsachse möglich ist, um im weiteren die Scherenschweißzange mit dem Blechkörper-Hindernis zugewandten fixierten Scherenarm dem nächsten Schweißbereich zuzuführen. Dieser Vorgang der Umorientierung der Scherenschweißzange um 180° ist in nachteiliger Weise zeitaufwendig.

Eine derartige Umorientierung ist auch bei der Schweißzange nach der gattungsbildenden Schrift der FR-A 2 468 433 erforderlich.

Der Erfindung liegt die Aufgabe zugrunde, eine gattungsgemäße Scherenschweißzange derart weiterzubilden, daß eine Umorientierung der Scherenschweißzange ohne eine Drehung um eine Zangen-Längsachse erzielbar ist bei sicherer Blockierung des jeweiligen Scherenarmes.

Diese Aufgabe ist mit dem Patentanspruch 1 gelöst.

Der Vorteil der Erfindung ist, daß anstelle einer Dreh-Umorientierung der gesamten Scherenschweißzange eine Umorientierung durch Funktionswechsel der Scherenarme tritt, wobei der zuvor schwenkbewegliche Scherenarm fixiert und der bislang fixierte Scherenarm schwenkbeweglich ist. Diese durch Funktionswechsel der Scherenarme erzielte Umorientierung kann während der Verbringung der Schweißzange zwischen den Schweißbereichen erfolgen, wodurch der Zeitaufwand für die Umorientierung erheblich reduziert ist.

Vorteilhafte Ausgestaltungen der Erfindung sind in den abhängigen Ansprüchen angegeben. Anspruch 2 beschreibt eine für die Funktionswechsel-Umorientierung vorteilhafte Anordnung einer an den Antriebsarmen der Scherenarme gesteuert wirkenden Blockiereinrichtung, die gemäß Anspruch 3 für jeden Antriebsarm einen gesonderten, doppeltwirkenden Stell-Zylinder umfaßt. An den Antriebsarmen angelenkte und gegen eine starre Bais abgestützte Hydraulikzylinder zur Drucksteuerung der Elektroden sind per se aus den US 4 810 849 bekannt. Während bei dieser Ausgestaltung zum Öffnen und Schließen gemäß Vorhub und Schweißhub eine zwischen den Antriebsarmen angeordnete, gelenkig angreifende Antriebseinheit vorgesehen ist, können diese doppeltwirkenden Stell-Zylinder gemäß Anspruch 6 zusätzlich als Antriebseinrichtungen dienen. Derartige Stell-Zylinder mit zwei gesondert ansteuerbaren, doppelwirkenden Kolben in einem gemeinsamen Zylinder zum voneinander unabhängigen Antrieb einzelner Zangenarme sind per se aus der DE 40 40 395 bekannt.

Zur kinematisch einwandfreien, wechselweisen Steuerung der Scherenarme sind die jeweiligen Stell-Zylinder an einer die Gelenkverbindung der Scherenarme tragenden Basisplatte gelenkig abgestützt, wobei die Basisplatte gemäß Anspruch 8 als Verbindungsglied der Scherenschweißzange zu einem Manipulator bzw. einem programmgesteuerten Roboter dient, wie dies per se aus der FR-A 2 468 433 bekannt ist. Diese Basisplatte trägt weiter Anschläge zur Begrenzung des jeweiligen Zangenausgleiches. Der zur Schonung der zu verschweißenden Bauteile erforderliche oder gewünschte Zangenausgleich des relativ fixierten Scherenarmes kann über die o.g. Stell-Zylinder durch pneumatische oder hydraulische Ansteuerung selbst erreicht werden gemäß Anspruch 5, oder aber durch gesteuerte Verlagerungen der basisplattenseitigen Abstützungen gemäß Anspruch 4.

Die Erfindung ist anhand von zwei in der Zeichnung schematisch dargestellten Ausführungsbeispielen beschrieben.

Es zeigt
- Figur 1: eine erfindungsgemäße Scherenschweißzange mit gesonderten Blockier-Stell-Zylindern und einer Antriebseinrichtung,
- Figur 2: eine andere erfindungsgemäße Scherenschweißzange mit zwei Antriebseinrichtungen, die wahlweise zum Antrieb oder zum Fixieren dienen.

Eine Scherenschweißzange 1 für elektrische Widerstandschweißungen zum Einsatz in einem nicht gezeigten Manipulator bzw. programmgesteuerten Roboter umfaßt gelenkig miteinander verbundene Scherenarme 2, 3, die einerseits der durch einen Schwenkbolzen 4 erzielten Gelenkverbindung 5 Elektroden 6, 7 tragende Zangenarme 8, 9 und andererseits Antriebsarme 10, 11 aufweisen. Einer der Scherenarme 2, 3 ist über seinen Antriebsarm 10, 11 mittels einer Antriebseinrichtung 12 relativ zum anderen, fixiert gehaltenen Scherenarm 3, 2 gemäß einem vorbestimmten Vor- und Schweiß-Hub (= Öffnungsmaß) schwenkbeweglich gesteuert betätigt.

Zur Vermeidung einer zeitraubenden Umorientierung der Scherenschweißzange 1 durch Drehen von 180° um die im wesentlichen in der Bauteil- bzw. Schweißgut-Ebene liegende Zangenlängsachse 13 zur Vermeidung einer Kollision eines der geöffneten Scherenarme 2, 3 mit einem Bauteil-Hindernis erfolgt erfindungsgemäß eine Umorientierung durch Funktionswechsel der Scherenarme 2, 3. Hierfür ist die erfindungsgemäße Scherenschweißzange 1 derart ausgebildet, daß jeder der Scherenarme 2, 3 relativ zu einer Basisplatte 14 der Gelenkverbindung 5 für eine Funktionswechsel-Umorientierung wahlweise fixierbar oder schwenkbar ist.

Die auf eine Funktionswechsel-Umorientierung der Scherenarme 2, 3 abgestellte Scherenschweißzange 1 weist neben der zwischen den Antriebsarmen 10, 11 in deren freien Endbereichen 10', 11' jeweils gelenkig angreifenden Antriebseinrichtung 12 weiter an jedem Antriebsarm 10, 11 eine im jeweils gleichen Abstand von der Gelenkverbindung 5 angreifende, wahlweise ansteuerbare Blockiereinrichtung 15 auf, von denen jede gegen die Basisplatte 14 abgestützt angeordnet ist.

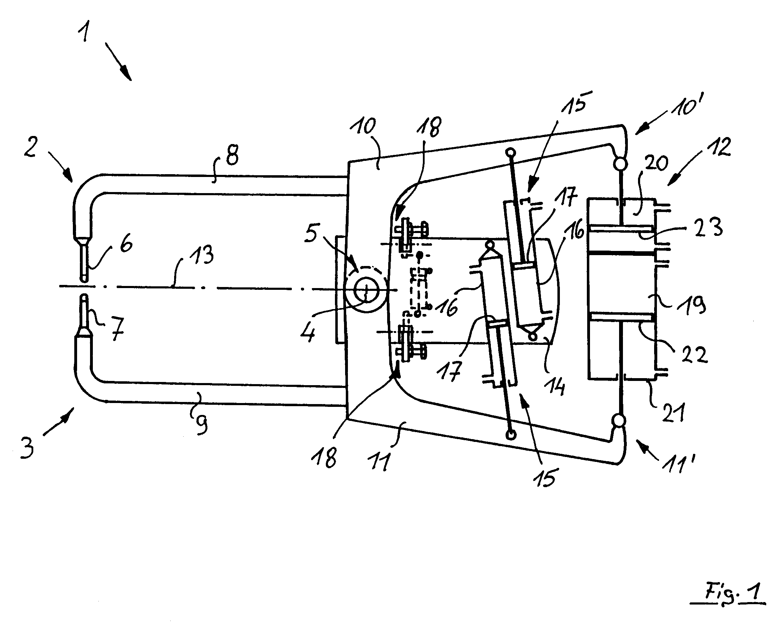

Wie aus der Figur 1 ersichtlich, umfaßt jede Blockiereinrichtung 15 zur wahlweisen Fixierung des gewünschten Scherenarmes 2 oder 3 über den jeweiligen Antriebsarm 10 oder 11 einen gesonderten, doppeltwirkenden Stell-Zylinder 16 mit einem Kolben 17, der pneumatisch oder hydraulisch feststellbar ist, demgegenüber der Kolben 17 in dem anderen Stell-Zylinder 16 des z.B. wahlweise schwenkbeweglich gesteuert betätigten Scherenarmes 2 frei verlagerbar ist.

Weiter ist es üblich, den zum Schweißen fixierten Scherenarm 2 oder 3 vor und nach der Schweißung zur Schonung des Schweißgutes um das Maß eines Zangenausgleiches zu schwenken. Erfindungsgemäß ist dies bei der Scherenschweißzange 1 beispielsweise dadurch erreicht, daß der Kolben 17 des beispielsweise zur Fixierung gewählten Scherenarmes 3 dienenden Stell-Zylinders 16 relativ zu seiner Blockierstellung für eine Zangenausgleichs-Schwenkbewegung gesteuert verlagerbar ist.

Eine andere erfindungsgemäße Ausgestaltung sieht vor, daß der beispielsweise zur Fixierung des Scherenarmes 3 gesteuert blockierte Stell-Zylinder 16 über seine Abstützung bzw. Anlenkung an der Basisplatte 14 relativ zu dieser für eine Zangenausgleichs-Schwenkbewegung gesteuert verlagerbar angeordnet ist. Die Zangenausgleichs-Schwenkbewegung kann also erfindungsgemäß entweder pneumatisch/hydraulisch oder mechanisch bewirkt sein.

Zur Vereinfachung der Steuerung der Zangenausgleichs-Schwenkbewegung ist an der Basisplatte 14 einem jeden Scherenarm 2, 3 bzw. Antriebsarm 10, 11 zugeordnet ein schwenk- und einstellbarer Anschlag 18 zur mechanischen Begrenzung des Zangenausgleiches vorgesehen. Vorteilhaft dient die Basisplatte 14 weiter als Verbindungsglied der Scherenschweißzange 1 zum Steuerkopf eines nicht gezeigten Manipulators.

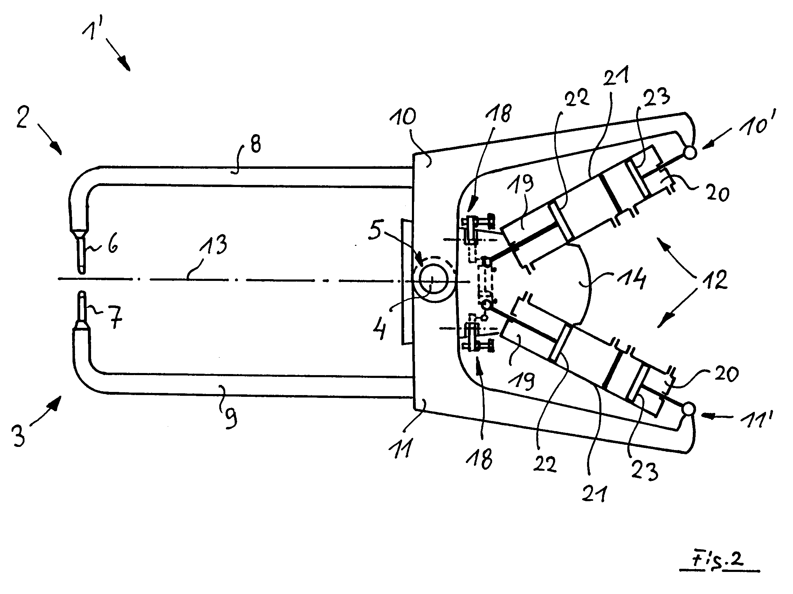

Die Figur 2 zeigt eine der Figur 1 ähnliche Scherenschweißzange 1', bei der gleiche Teile mit identischen Bezugszeichen belegt sind. Im Unterschied zur Scherenschweißzange 1 der Figur 1 steht bei der Scherenschweißzange 1' jeder Antriebsarm 10, 11 mit einer gesonderten, an der Basisplatte 14 abgestützten Antriebseinrichtung 12 in Verbindung, wobei jede Antriebseinrichtung 12 in getrennten Kammern 19, 20 eines gemeinsamen Zylinders 21 gesondert ansteuerbare, doppeltwirkende Kolben 22, 23 umfaßt.

Der für den Vorhub beispielsweise am gewählten Scherenarm 3 zur Schwenkbewegung angreifende Kolben 22 dient mittels gesteuerter Blockierung der wahlweisen Fixierung des Scherenarmes 3 relativ zur Basisplatte 14, wobei der andere, nach dem Vorhub für den anschließenden Schweißhub vorgesehene Kolben 23 im gleichen Zylinder 21 bei fixiertem Scherenarm 3 aus seiner hierfür bewirkten Blockierstellung für eine Zangenausgleichs-Schwenkbewegung in seiner Kammer 20 gesteuert verlagerbar ist. Bei der Scherenschweißzange 1' übernehmen somit zwei Antriebseinrichtungen 12 zusätzlich die Fixiermaßnahmen der Blockier-Stell-Zylinder 16 des Ausführungsbeispiels nach Figur 1.

Das in Figur 2 veranschaulichte Prinzip des wahlweisen Schwenkens und Fixierens des jeweiligen Scherenarmes 2, 3 mittels zweier Antriebseinrichtungen 12 mit jeweils in einem gemeinsamen Zylinder 21 gesondert ansteuerbaren, doppeltwirkenden Kolben 22, 23 in getrennten Kammern 19, 20 kann in nicht dargestellter Weise konstruktiv auch so verwirklicht werden, daß zwei jeweils als Flachzylinder gestaltete Antriebseinrichtungen 12 jeweils an den freien Endbereichen 10', 11' der Antriebsarme 10, 11 angreifend angeordnet sind, wobei die vorzugsweise für eine platzsparende Anordnung mit ihren Flachseiten zueinander im wesentlichen parallel angeordneten Flachzylinder mit der Basisplatte 14 über das jeweilige Zylindergehäuse in abgestützter Verbindung stehen.

Im Rahmen der Erfindung kann auch eine elektrische Antriebseinrichtungen mit gesondert ansteuerbaren Antriebselementen vorgesehen sein.

## Patentansprüche

1. Scherenschweißzange für elektrische Widerstandsschweißungen, insbesondere zum Einsatz in Manipulatoren,
- umfassend gelenkig miteinander verbundene Scherenarme (2, 3), die
- einerseits ihrer an einer Basisplatte (14) angeordneten Gelenkverbindung (5) Elektroden (6, 7) tragende Zangenarme (8, 9) und andererseits Antriebsarme (10, 11) zum Angriff von Antriebseinrichtungen (12) aufweisen, wobei
- einer der Scherenarme (2, 3) über seinen Antriebsarm (10, 11) mittels der Antriebseinrichtung (12) relativ zum anderen, gesteuert fixiert gehaltenen Scherenarm (3, 2) gemäß einem vorbestimmten Vor- und Schweiß-Hub schwenkbeweglich gesteuert betätigt ist,
dadurch gekennzeichnet,
- daß jeder der Scherenarme (2, 3) der Scherenschweißzange (1, 1') mit der Basisplatte (14) der Gelenkverbindung (5) über eine ansteuerbare Blockiereinrichtung (15) derart in Verbindung steht, daß
- jeder der Scherenarme (2, 3) für eine Umorientierung wahlweise gesteuert fixiert oder schwenkbeweglich ist, wobei
- der zum Schweißen fixierte Scherenarm (2, 3) vor und nach der Schweißung um das Maß des Zangenausgleiches geringfügig schwenkbar ist.

2. Scherenschweißzange nach Anspruch 1, dadurch gekennzeichnet,
- daß zwischen den Antriebsarmen (10, 11) der Scherenschweißzange (1) in deren freien Endbereichen (10', 11') eine jeweils gelenkig angreifende Antriebseinrichtung (12), angeordnet ist, und
- daß weiter die an den Antriebsarmen (10, 11) angreifenden Blockiereinrichtungen an der Basisplatte (14) jeweils im wesentlichen gleichen Abstand von der Gelenkverbindung (5) abgestützt angeordnet sind.

3. Scherenschweißzange nach Anspruch 2, dadurch gekennzeichnet,
- daß die Blockiereinrichtung (15) für jeden Antriebsarm (10, 11) einen gesonderten, doppeltwirkenden Stell-Zylinder (16) umfaßt, wobei
- ein der Fixierung eines der Scherenarme (2, 3) relativ zur Basisplatte (14) dienender Stell-Zylinder (16) einen gesteuert pneumatisch oder hydraulisch blockierbaren Kolben (17) aufweist, demgegenüber
- der Kolben im anderen Stell-Zylinder (16) des schwenkbeweglich gesteuert betätigten Scherenarmes (2, 3) frei verlagerbar ist.

4. Scherenschweißzange nach Anspruch 3, dadurch gekennzeichnet, daß der zur Fixierung des gewählten Scherenarmes (2, 3) gesteuert blockierte Stell-Zylinder (16) über seine basisseitige Abstützung relativ zur Basisplatte (14) für eine Zangenausgleichs-Schwenkbewegung gesteuert verlagerbar angeordnet ist.

5. Scherenschweißzange nach Anspruch 3, dadurch gekennzeichnet, daß der Kolben (17) des zur Fixierung des gewählten Scherenarmes (2, 3) dienenden Stell-Zylinders (16) relativ zu seiner Blockierstellung für eine Zangenausgleichs-Schwenkbewegung gesteuert verlagerbar ist.

6. Scherenschweißzange nach Anspruch 1, dadurch gekennzeichnet,
- daß jeder Antriebsarm (10, 11) der Scherenschweißzange (1') mit einer gesonderten, an der Basisplatte (14) abgestützten Antriebseinrichtung (12) in Verbindung steht, und
- jede Antriebseinrichtung (12) zwei in getrennten Kammern (19, 20) eines gemeinsamen Zylinders (21) gesondert ansteuerbare, doppeltwirkende Kolben (22, 23) umfaßt, wobei
- der jeweilige für den Vorhub am gewählten Scherenarm (2, 3) zur Schwenkbewegung angreifende Kolben (22) zur gesteuerten Blockierung des Scherenarmes (2, 3) entsprechend beaufschlagt ist, und
- der andere, im gleichen Zylinder (21) in der abgetrennten Kammer (20) nach dem Vorhub für den Schweißhub wirksame Kolben (23) bei fixiertem Scherenarm (2, 3) aus seiner Blockierstellung für eine Zangenausgleichs-Schwenkbewegung in seiner Kammer (20) gesteuert beaufschlagt verlagerbar ist.

7. Scherenschweißzange nach Anspruch 1, dadurch gekennzeichnet, daß eine elektrische Antriebseinrichtung mit gesondert ansteuerbaren Antriebselementen vorgesehen ist.

8. Scherenschweißzange nach den Ansprüchen 1 bis 7, dadurch gekennzeichnet, daß die Basisplatte (14) als Verbindungsglied der Scherenschweißzange (1, 1') zu einem Manipulator bzw. programmgesteuerten Roboter dient.

9. Scherenschweißzange nach einem oder mehreren der Ansprüche 1 bis 8, dadurch gekennzeichnet, daß die Basisplatte (14) einen jedem Scherenarm (2, 3) zugeordneten, der Begrenzung des Zangenausgleiches dienenden Anschlag (18) aufweist.

## Claims

1. Welding tongs for electrical resistance welding, especially for application in manipulators,
- comprising scissors arms (2, 3) linked together by a pivot, which
- have, on the one hand tongs arms (8, 9) carrying electrodes (6 7) arranged on a base plate (14) by a hinge joint (5) and on the other hand drive arms (10, 11) to engage with drive devices (12), whereby
- one of the scissors arms (2, 3) is operated via its drive arm (10, 11) by means of the drive device (12) to pivot under control relative to the other scissors arm (3, 2), held fixed under control in accordance with a predetermined pre- and weld-cycle,
characterised in that
- each of the scissors arms (2, 3) of the welding tongs (1, 1') is in connection with the base plate (14) of the hinge joint (5) via a controllable locking device (15) such that
- each of the scissors arms (2, 3) is controlled as fixed or pivoting for reorienting, whereby
- the scissors arm (2, 3) fixed for welding can be pivoted a small amount before and after welding by the amount of the tongs equalisation.

2. Welding tongs in accordance with Claim 1, characterised in that,
- a drive device (12), is arranged between the drive arms (10, 11) of the welding tongs (1), engaging pivotally at each of their free end regions (10', 11'), and
- further, the locking devices on the base plate (14) engaging on the drive arms (10,11) are arranged to be supported essentially at the same distance from the hinge joint (5).

3. Welding tongs in accordance with Claim 2, characterised in that
- the locking device (15) for each drive arm (10, 11) comprises a separate double-acting positioning cylinder (16), whereby
- one of the positioning cylinders (16) serving to fix one of the scissors arms (2, 3) relative to the base plate (14) has a pneumatic or hydraulic lockable piston (17), as opposed to which
- the piston in the other positioning cylinder (16) of the scissors arm (2, 3), set under control to be pivoting, is freely movable.

4. Welding tongs in accordance with Claim 3, characterised in that the positioning cylinder (16) controlled to be locked for the fixing of the selected scissors arm (2, 3) is arranged to be movable via its base side support relative to the base plate (14) over a tongs equalising pivotal movement.

5. Welding tongs in accordance with Claim 3, characterised in that the piston (17) of the positioning cylinder (16) serving for the fixing of the selected scissors arm (2, 3) can be moved under control relative to its locking position over a pivoting movement of a tongs equalisation.

6. Welding tongs in accordance with Claim 1, characterised in that
- each drive arm (10, 11) of the welding tongs (1') is in connection with a separate drive device (12) supported on the base plate (14), and
- each drive device (12) comprises two separately operable, double-acting pistons (22, 23) in separated chambers (19, 20) of a common cylinder (21), whereby
- the piston (22) engaging with the scissors arm (2, 3) selected for pivoting movement at the time for the pre-cycle for controlled locking of the scissors arm (2, 3) is suitably actuated, and
- the other piston (23) in the separate chamber (20) in the same cylinder (21) which is effective after the pre-cycle for the welding cycle with the scissors arm (2, 3) fixed can be moved under control in its chamber (20) from its locked position over a tongs equalisation pivoting movement.

7. Welding tongs according to Claim 1, characterised in that an electrical drive arrangement with separately controllable drive elements is provided.

8. Welding tongs according to Claims 1 to 7, characterised in that the base plate (14) serves as the connecting element of the welding tongs (1, 1') to a manipulator or programme controlled robot.

9. Welding tongs according to one or more of Claims 1 to 8, characterised in that the base plate (14) has a stop (18) allocated to each scissors arm (2, 3) for the limiting of the tongs equalisation.

## Revendications

1. Pince à souder pour le soudage électrique par résistance notamment destinée à des manipulateurs,
- comprenant des bras de pince (2, 3) reliés de manière articulée qui présentent d'un côté au niveau de leur articulation (5) prévue sur la plaque de base (14), des bras de pince (8, 9) portant des électrodes (6, 7) et de l'autre côté des bras d'entraînement (10, 11) pour être pris par des installations d'entraînement (12), et
- l'un des bras de pince (2, 3) peut être actionné de manière commandée avec mobilité en pivotement selon une course d'avance et de soudage prédéterminée, par son bras d'entraînement (10, 11) par l'intermédiaire d'une installation d'entraînement (12), par rapport à l'autre bras (3, 2) commandé de manière fixe,
caractérisée en ce que
- chacun des bras de cisaille (2, 3) de la pince à souder (1, 1') est relié à la plaque de base (14) de la liaison articulée (5) par une installation de blocage (15), commandée de façon que :
- chacun des bras de pince (2, 3) peut être commandé pour être bloqué ou mobile en pivotement au choix pour un changement d'orientation et,
- le bras de pince (2, 3) fixe pour souder, peut légèrement pivoter avant et après le soudage, de la dimension de la compensation des pinces.

2. Pince à souder selon la revendication 1, caractérisée en ce qu'
- entre les bras d'entraînement (10, 11) de la pince (1), dans les zones d'extrémités libres (10', 11'), il est prévu une installation d'entraînement (12) reliée chaque fois de manière articulée et,
- en outre les installations de blocage agissant sur les bras d'entraînement (10, 11) pour la plaque de base (14), sont chaque fois appuyées à une distance essentiellement égale de la liaison d'articulation (5).

3. Pince à souder selon la revendication 2,
caractérisée en ce que
l'installation de blocage (15) de chaque bras d'entraînement (10, 11) comprend un vérin d'actionnement (16) particulier à double effet, et,
- un vérin d'actionnement (16) servant à bloquer l'un des bras de cisaille (2, 3) par rapport à une plaque de base (14), comprend un piston (17) à commande pneumatique ou à blocage hydraulique, et
- le piston de l'autre vérin d'actionnement (16) du bras de pince actionné de manière commandée est libre en déplacement.

4. Pince à souder selon la revendication 3,
caractérisée en ce que
le vérin d'actionnement (16) bloqué de manière commandé pour la fixation du bras de pince (2, 3) choisi, est monté par son appui du côté de la base par rapport à la plaque de base (14) pour effectuer un mouvement de pivotement de compensation de la pince, en étant déplacé de manière commandée.

5. Pince à souder selon la revendication 3,
caractérisée en ce que
le piston (17) du vérin d'actionnement (16) servant à bloquer le bras de pince (2, 3), choisi, est commandé de manière déplaçable par rapport à sa position de blocage pour effectuer un mouvement de pivotement de compensation de pince.

6. Pince à souder selon la revendication 1,
caractérisée en ce que
- chaque bras d'entraînement (10, 11) de la pince à souder (1') est relié à une installation d'entraînement (12) appuyée de manière particulière sur la plaque de base (14) et,
- chaque installation d'entraînement (12) comprend deux pistons (22, 23) à double effet, à commande séparée, logés dans un cylindre commun (21) dans des chambres séparées (19, 20), et
- le piston (22) agissant respectivement sur le bras de pince (2, 3) choisi pour l'avance, pour effectuer le mouvement de pivotement, est commandé de manière appropriée pour bloquer le bras (2, 3) et,
- l'autre piston (23) agissant après l'avance de la course de soudage, dans le même cylindre (21) dans la chambre séparée (20), est déplacé, le bras de pince (2, 3) étant bloqué, de sa position de blocage pour effectuer un mouvement de pivotement de compensation de pince, dans sa chambre (20) en étant commandé.

7. Pince à souder selon la revendication 1,
caractérisée par
une installation électrique d'entraînement ayant des éléments d'entraînement commandés séparément.

8. Pince à souder selon une quelconque des revendications 1 à 7,
caractérisée en ce que
la plaque de base (14) constitue l'élément de liaison de la pince à souder (1, 1') avec un manipulateur ou un robot commandés par programme.

9. Pince à souder selon l'une quelconque des revendications 1 à 8,
caractérisée en ce que
la plaque de base (14) comporte une butée (18) associée à chaque bras de pince (2, 3) et servant à compenser le mouvement de la pince.
